(19) Europäisches Patentamt
European Patent Office
Office européen des brevets

(11) Veröffentlichungsnummer: **0 341 334 B1**

(12) **EUROPÄISCHE PATENTSCHRIFT**

(45) Veröffentlichungstag der Patentschrift: **12.02.92**

(51) Int. Cl.$^5$: **C09K 17/00**

(21) Anmeldenummer: **88107715.0**

(22) Anmeldetag: **13.05.88**

# (54) Verwendung einer Zusammensetzung zur Obenflächenbehandlung von Böden.

(43) Veröffentlichungstag der Anmeldung:
**15.11.89 Patentblatt 89/46**

(45) Bekanntmachung des Hinweises auf die Patenterteilung:
**12.02.92 Patentblatt 92/07**

(84) Benannte Vertragsstaaten:
**AT BE CH DE ES FR GB GR IT LI LU NL SE**

(56) Entgegenhaltungen:
**DE-A- 1 228 569**
**FR-A- 2 530 651**

(73) Patentinhaber: **SAREA A.G.**
**Zugerstrasse 8**
**CH-6330 Cham(CH)**

(72) Erfinder: **Hirsbrunner, Pierre**
**El Contero Chemin des Romains**
**CH-1801 Les Monts-de-Corsier(CH)**
Erfinder: **Roulin, Denys**
**Chemin des Saules 7**
**CH-1800 Vevey(CH)**

(74) Vertreter: **Thomas, Alain**
**55, avenue Nestlé**
**CH-1800 Vevey(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 341 334 B1

## Beschreibung

Die Erfindung betrifft die Verwendung einer Zusammensetzung für die Bodenbehandlung und ermöglicht es, die Oberfläche wasserabweisend zu machen und damit ein gutes Wasserrückhaltevermögen in den unteren Schichten zu erzielen.

Der Erfindung liegt die Aufgabe zugrunde, ein Mittel zu finden, das es ermöglicht, das Wasserrückhaltevermögen zu verbessern, besonders unter wüstenartigen Bedingungen. Dieses Ziel ist bedeutend, denn es ist bekannt, dass sich bei wüstenartigen Zuständen ein gewisser Teil des Wassers bei Tagesanbruch absetzt und dann in den ersten Stunden des Tages verdunstet. Das angestrebte Ziel ist, Mittel zu finden, um dieses Wasser im Boden zurückzuhalten. Das Patent FR 1541089 betrifft ein Verfahren zur Bodenbehandlung: Eine Emulsion aus Asphalt und Wasser bewirkt bei Auftragen bis 2t/ha eine Retention von 30%. Der Nachteil dieses Verfahrens ist einerseits eine hohe Aufbringungsrate, andererseits ist die Retention nicht ausreichend.

Die vorliegende Erfindung betrifft die Verwendung einer Zusammensetzung, die in einem flüssigen Träger ein polymeres Wasserstoffsiloxan (oder (H) Siloxan) der allgemeinen Formel:

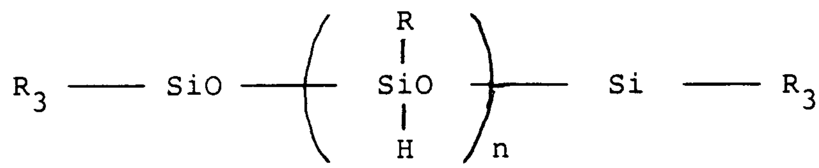

enthält, wobei n zwischen 1 und 70 liegt und R Alkyl-, Hydroxyalkyl-, Aminoalkyl-, Halogenoalkyl- oder Arylrest ist.

Der flüssige Träger ist entweder Wasser oder ein organisches Lösungsmittel. Das Wasserstoffsiloxan-Polymer ist in Wasser unlöslich und bildet eine wässrige Emulsion. Das organische Lösungsmittel ist in der Klasse von Alkane, Halogenkohlenwasserstoffe, Ketone und Alkylacetate, zum Beispiel Dichlormethan, Methylethylketone, Ethyl-, Butyl- oder Pentyl-acetate, White Spirit.

Die Anwendung mit Wasser ist bevorzugt.

Um die Wirkung der Zusammensetzung zu untersuchen, muss man auf zwei Parameter achten, die Wasserabweisung und die Retention (Wasserrückhaltevermögen).

Die Wasserabweisung ist als Durchtrittsdauer des Wassers durch einen Boden, der mit einem zuvorgenannten polymeren (H) Siloxan behandelt worden ist, charakterisiert. Die Zeit, die das Wasser benötigt, um die behandelte Schicht zu durchdringen, ist ein Kriterium für Wasserabweisung und beträgt normalerweise zwischen 5 und 30 Minuten, was eine gute Wasseransammlung ermöglicht.

Die Retention ist der Anteil des Wassers, der unter der Schicht des behandelten Bodens zurückbleibt.

Diese zwei Kenngrössen werden in der weiteren Beschreibung noch genauer definiert.

In der verwendeten Zusammensetzung ist das Radikal, R ein Alkyl mit $C_1$-$C_{18}$ vorzugsweise mit $C_1$-$C_{12}$. R ist genauer noch ein Methyl- oder Fluoroalkyl-Rest.

Die Zahl n liegt vorzugsweise zwischen 5 und 45.

Der Gehalt an polymeren (H) Siloxan auf der oberen Schicht des Bodens beträgt zwischen 125 und 200 ppm (g/m$^3$). Die oberflächliche Anwendung findet vorzugsweise mit einer (H) Siloxan-Emulsion statt, die zwischen 0,05 und 0,4 Gewichts-Prozent an polymerem (H) Siloxan enthält. Es ist zurzeit möglich, im Handel wässrige Lösungen von polymeren (H) Siloxanen zu kaufen. Das Ausbringen auf den Boden erfolgt mit konventionellen Geräten, wie sie für Insektizide und Dünger eingesetzt werden. Behandelt wird jeder Bodentyp, vor allem Sandböden, 1-2 mal jährlich. Man verteilt die Mischung so, dass man auf dem Boden eine Konzentration ein polymeres (H) Siloxan zwischen 10 und 40 kg/ha, vorzugsweise zwischen 15 und 35 kg/ha erhält; das sind 1-4 g/m$^2$ bzw. 1,5-3,5 g/m$^2$.

### Wasserabweisungstest

Man mischt 10 Teile trockenen Sand, 1 Teil (H) Siloxanzusammensetzung, und rührt die Mischung im rotierenden Verdunster während 4 Stunden bei 50° C. Auf eine Schicht aus trockenem, unbehandelten Sand gibt man gleichmässig den siloxanisierten Sand in einer Schichtdicke von 10 mm.

Dann gibt man 8-10 mm Wasser darauf und beobachtet die Durchtrittszeit dieses Wassers durch den siloxanisierten Sand. Tabelle I zeigt die Ergebnisse bei vier verschiedenen Zusammensetzungen.

Tabelle I

| Behandlungsmittel | Konzentration des Aktivenmittels (g/$m^3$ Sand) | Chemische Reaktion bei Aufbringung (Silylierung) | Vergangene Zeit vor dem Eintritt des Wassers in die untere unbehandelte Schicht |
|---|---|---|---|
| Polymethyl (H) Siloxan -fluoro substituiert(SIM) TFR ID=4.11>(1) | 100 | Ja | Null |
| | 150 | Ja | 2-5 Min |
| | 175 | Ja | 0,5-2 Stunden |
| | 200 | Ja | 6-24 Stunden |
| | 300 | Ja | ≧ 48 Stunden |
| Polymethyl (H) Siloxan Produkt A TFR ID=4.12>(2) | 175 | Ja | ≦ 60 Min |
| | 200 | Ja | 24 Stunden |
| Polymethyl (H) Siloxan (Emulsion) Produkt B (3) | 200 | Ja | 2-30 Min |
| Polymethyl (H) Siloxan (Oel) Produkt C | 2000 | Nein | ≦ 1 Min |

(1) Silylierungsmittel zum Imprägnieren von Leder und Wildleder. Anwendung in Dichlormethan (n = 10±5)
(2) Anwendung in Dichlormethan (n = 40±5)
(3) n = 40±5.

Die drei ersten Zusammensetzungen weisen die grösste Wasserabweisungsaktivität auf. Die wirksamste Konzentration für die ersten zwei Produkte ist jene von 175 ppm, was ziemlich genau 2,6 g/$m^2$ entspricht.

Wasserretentions-Test

Das Wasser durchdringt die gut behandelte Schicht, ohne sie zu durchnässen und wird in die untere unbehandelte wasseraufsaugende Schicht aufgenommen. Die obere Schicht darüber wirkt als Schutz gegen die tägliche Verdunstung und für die Ueberführung bei der zweiten Phase des täglichen Zyklus. Die Wasser-Retention wird definiert als das Verhältnis zwischen zurückbleibendem Wasser zu aus der festen, mit Wasser gesätigten, unbehandelten Phase verdunstetem Wasser.

Sie wird durch Schweremessung (Gravimetrie) bestimmt und in % ausgedrückt.

$$\% \text{ Retention} = \frac{P_o - P_t}{P_o} \times 100$$

$P_o$ = Verlust, Vergleichswert unbehandelt
$P_t$ = Verlust, bei behandeltem Sand

Wenn die Behandlung ideal ist, ist die Retention 100%. Wenn sie unwirksam ist, geht die Retention gegen 0. Man geht folgendermassen vor:
Man hat eine Schicht aus trockenem, unbehandelten Sand als Boden, gibt darüber eine Schicht von 10 mm behandelten Sandes. Das bis zur Sättigung des Sandes benötigte Wasser (1 Teil Wasser für 3 Teile Sand) wird auf der Oberfläche verdunstet. Der Gewichtsverlust wird in Abhängigkeit von der Zeit nach Aussetzen unter IR-Lampen, die die Oberflächentemperatur auf 55 - 60 °C halten, bestimmt. Zur Ermittlung der Richtzahl für die Retention ist es unerlässlich, den Test unter denselben Bedingungen mit einem unbehandelten Muster durchzuführen. In der nachstehend Tabelle II, finden sich die Ergebnisse für die gleichen Stoffe wie bei dem Wasserabweisungstest.

Tabelle II

| Behandlungsmittel | Konzentration des Mittels ppm (oder g/$m^3$) | Kumulierter Wasserverliegt (g/$cm^2$) | Retention % |
|---|---|---|---|
| SIM | 100 | 0,13 0,19 0,27 0,6 0,95 | 33 |
| | 150 | 0,06 0,14 0,21 0,42 0,75 | 53 |
| | 175 | 0,05 0,10 0,15 0,38 0,60 | 58 |
| | 200 | 0,03 0,09 0,14 0,33 0,60 | 65 |
| Produkt A | 200 | 0,07 0,1 0,15 0,30 0,6 | 63 |
| Produkt B | 200 | 0,13 0,16 0,20 0,30 0,6 | 67 |
| | 150 | 0,15 0,18 0,20 0,35 0,65 | 61 |
| | 200 | 0,05 0,10 0,14 0,27 0,57 | 70 |
| Produkt C | 2000 | 0,18 0,35 0,45 0,80 1,00 | 11 |

Eine Retention über 50% wird als zufriedenstellend betrachtet. Dieses Ergebnis erhält man bei den reagierenden Polymethyl (H) Siloxanen, das sind die ersten drei Produkte in der Tabelle.

Als optimale Aufbringungsdichte werden 150 - 200 ppm oder g/$m^3$ erachtet.

Beispiel:

Das Beispiel zeigt eine lokale Aufbringung durch Vernebeln einer Emulsion von Polymethyl (H) Siloxan in verschiedenen Verdünnungen mit einer eine Düse von 1 mm Durchmesser aufweisenden Pistole. Man macht eine oberflächliche Anwendung von 2,6 g Polymethyl (H) Siloxan bei verschiedenen Verdünnungen. Der Versuchsablauf geschieht nach folgendem Schema:

Dispersion der Emulsion des Mittels (Luftpistole, 1 bar),
Trocknung/Reaktion (1 Tag),
Zuführen des Wassers auf die Oberfläche (1 g/$cm^3$),
gravimetrische Entwicklung abhängig von der Zeit.
Die Messungen werden bei normalen Druck- und Temperaturbedingungen bei 60% relativer Feuchtigkeit durchgeführt.

Die Tabelle III sammelt alle Ergebnisse:

Tabelle III

| Einfluss der Dicke der wasserabstossenden Schicht (Anwendung von 25 Kg/ha Polymethyl(H)siloxan) | | | | | | | |
|---|---|---|---|---|---|---|---|
| Beispiel Nr. | Konzentration (% Trockenanteil) | Wasserabweisungsdicke (mm) | Kumulierter Wasserverlust (g/$cm^2$) | | | | Retention % 0 bis T + 2 |
| 0 | - | 0 | 0,46 | 0,85 | 1 | 1 | 0 (Ref.) |
| 1 | 0,05 | 5 -10 | 0,36 | 0,60 | 0,85 | 1 | 30% |
| 2 | 0,05 | 7 -15 | 0,25 | 0,52 | 0,75 | 1 | 39% |
| 3 | 0,1 | 10 -15 | 0,15 | 0,27 | 0,38 | 0,62 | 68% |
| 4 | 0,1 | 10 -20 | 0,15 | 0,27 | 0,37 | 0,62 | 58% |
| 5 | 0,15 | 15 -20 | 0,10 | 0,20 | 0,28 | 0,45 | 76% |
| 6 | 0,15 | 10 -30 | 0,14 | 0,25 | 0,35 | 0,55 | 70% |
| 7 | 0,20 | 10 -20 | 0,17 | 0,30 | 0,45 | 0,76 | 65% |
| 8 | 0,40 | 2 -10 | 0,22 | 0,42 | 0,62 | 0,99 | 51% |
| 9 | 0,40 | 10 -15 | 0,22 | 0,32 | 0,55 | 0,85 | 56% |
| 10 | 0,80 | 1 -5* | 0,24 | 0,49 | 0,74 | 1 | 42% |
| T = Tag der Aufbringung | | | | | | | |

* = Bildung von Wasser undurchlässige Zone

Die Konzentration des Mittels bei der lokalen Aufbringung ist ein wichtiger Faktor und in diesem Beispiel erreicht man die maximale Retention bei einer Konzentration von 0,15% Trockensubstanz.

Die Betrachtung der Ergebnisse zeigt, dass jenseits von 0,4% die Wassermenge zu schwach ist, um eine ausreichende Diffusion des Mittels zu gestatten. Unter 0,05% ist die Wassermenge zu gross, das verdünnte Mittel kommt in die unteren Schichten, wo es in der Konzentration zu schwach ist, um eine ausreichende wasserabweisende Eigenschaft zu haben.

Die Behandlung gemäss der Erfindung erlaubt also eine permanente Anwesenheit von Wasser im Boden, wobei die Menge für die Entwicklung einer Lebendkultur unter wüstenartigen Bedingungen ausreicht.

Es genügt, benanntes polymeres (H) Siloxan in der beschriebenen Weise ein oder zweimal jährlich auszubringen, da das Polymer unter der Einwirkung des Lichtes langsam abgebaut wird.

**Patentansprüche**

1. Verwendung einer Zusammensetzung zur Bodenoberflächenbehandlung, um die Oberfläche des Bodens wasserabweisend zu machen und darin eine gute Wasserretention des Bodens zu erzielen, dadurch gekennzeichnet, dass die Zusammensetzung in einem flüssigen Träger ein polymeres Wasserstoffsiloxan der allgemeinen Formel:

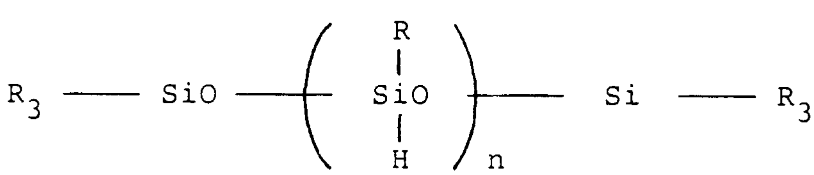

enthält, wobei n zwischen 1 und 70 liegt und R Alkyl-, Hydroxyalkyl-, Aminoalkyl-, Halogenoalkyl- oder Arylrest ist.

**2.** Verwendung einer Zusammensetzung gemäss Anspruch 1, dadurch gekennzeichnet, dass n zwischen 5 und 45 liegt.

**3.** Verwendung einer Zusammensetzung gemäss Ansprüche 1 und 2, dadurch gekennzeichnet, dass der flüssige Träger Wasser oder Dichlormethan ist.

**4.** Verwendung einer Zusammensetzung gemäss Ansprüche 1 bis 3, dadurch gekennzeichnet, dass das Radikal Akyl ein Radikal in $C_1$ - $C_{18}$ ist.

**5.** Verwendung der Zusammensetzung gemäss Anspruch 4, dadurch gekennzeichnet, das das Radikal Alkyl eine Gruppe methyl oder fluormethyl ist.

**6.** Verwendung der Zusammensetzung gemäss Ansprüche 1 bis 5, dadurch gekennzeichnet, das die Zusammensetzung zwischen 0,05 und 0,4 Gew. Prozent polymerer (H) Siloxan enthält.

**7.** Verfahren zur Bodenbehandlung mit der Zusammensetzung gemäss Ansprüche 1 bis 6, dadurch gekennzeichnet, das man diese Zusammensetzung auf den Boden in einer solchen Menge aufbringt, dass man eine Konzentration polymerer (H) Siloxan auf den Boden zwischen 10 und 40 kg/ha erhält.

**8.** Verfahren gemäss Anspruch 7, dadurch gekennzeichnet, dass man die Zusammensetzung auf den Boden in einer solchen Menge aufbringt, dass man eine Konzentration polymerer (H) Siloxan auf den Boden zwischen 15 und 35 kg/ha erhält.

## Claims

**1.** The use of a composition for the surface treatment of soil to make the surface of the soil water-repellent and to provide the soil with good water retention, characterized in that the composition contains in a liquid carrier a polymeric hydrogen siloxane corresponding to the following general formula

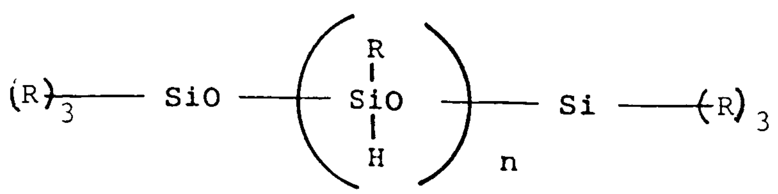

in which
n is a number of from 1 to 70 and
R is an alkyl, hydroxyalkyl, aminoalkyl, haloalkyl or aryl radical.

**2.** The use of a composition as claimed in claim 1, characterized in that n is a number of from 5 to 45.

**3.** The use of a composition as claimed in claims 1 and 2, characterized in that the liquid carrier is water or dichloromethane.

**4.** The use of a composition as claimed in claims 1 to 3, characterized in that the alkyl radical contains from 1 to 18 carbon atoms.

**5.** The use of the composition claimed in claim 4, characterized in that the alkyl radical is a methyl or fluoromethyl group.

**6.** The use of the composition claimed in claims 1 to 5, characterized in that the composition contains

between 0.05 and 0.4% by weight polymeric (H) siloxane.

7. A process for the treatment of soil using the composition claimed in claims 1 to 6, characterized in that the composition is applied to the soil in such a quantity that a concentration of polymeric (H) siloxane on the soil of from 10 to 40 kg/ha is obtained.

8. A process as claimed in claim 7, characterized in that the composition is applied to the soil in such a quantity that a concentration of polymeric (H) siloxane on the soil of from 15 to 35 kg/ha is obtained.

## Revendications

1. Utilisation d'une composition pour le traitement en surface des sols, permettant de rendre la surface dudit sol hydrophobe et d'y induire une bonne rétention d'eau, caractérisé en ce que ladite composition contient en solution dans un liquide un polymère de silane de formule générale,

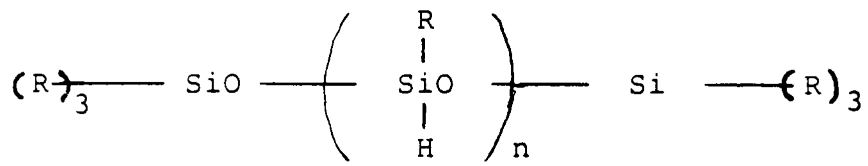

n étant compris entre 1 et 70 et R étant un radical alkyle, hydroxyalkyle, aminoalkyle, halogénoalklyle ou aryle.

2. Utilisation selon la revendication 1, caractérisé en ce que n est compris entre 5 et 45.

3. Utilisation selon l'une des revendications 1 ou 2, caractérisé en ce que le liquide utilisé est de l'eau ou du dichlorométhane.

4. Utilisation selon l'une des revendications 1 à 3, caractérisé en ce que le radical alkyle est un radical en $C_1$ à $C_{18}$.

5. Utilisation selon la revendication 4, caractérisé en ce que le radical alkyle est un groupe méthyle ou fluorométhyle.

6. Utilisation selon l'une des revendications 1 à 5, caractérisé en ce que la composition contient entre 0,05 et 0,4% en poids de polymère de silane.

7. Procédé de traitement d'un sol avec la composition selon l'une des revendications 1 à 6, caractérisé en ce qu'on répand ladite composition sur le sol à traiter en une quantité telle qu'on arrive à une concentration de polymère de silane sur le sol comprise entre 10 et 40 kg/ha.

8. Procédé selon la revendication 7, caractérisé en ce qu'on répand la composition sur le sol à traiter en une quantité telle qu'on arrive à une concentration de polymère de silane sur le sol comprise entre 15 et 35 kg/ha.